# EUROPEAN PATENT APPLICATION

(11) **EP 4 275 553 A1**
(43) Date of publication of application: **15.11.2023**
(21) Application number: 23172227.3
(22) Date of filing: 09.05.2023
(51) Int. Cl.: A47C 1/032

(54) **ADJUSTMENT DEVICE FOR A CHAIR WITH OSCILLATING MECHANISM**

(30) Priority: 10.05.2022 IT 202200009572
(71) Applicant: Brado S.p.A., 31030 Valdobbiadene (IT)
(72) Inventor: SERENA, Stefano, 31031 CAERANO DI SAN MARCO TV (IT); HOLLARD, Trevor Robert, 94307 EGGENFELDEN (DE)
(74) Representative: Modiano, Micaela Nadia

(57) **Abstract**

An adjustment device (1) for a chair, comprising an oscillating mechanism composed of a first plate (2), associated with a central gasoperated post for the height adjustment of a seat. A second plate (7) is articulated to the first plate (2) so that it can oscillate, by means of a pair of first pivots (8a, 8b) and is fixed to a backrest. A linkage (14) is furthermore articulated to the first plate (2), by means of a second pivot (15), and is in turn articulated, by means of a third pivot (20), to a third plate (21), with which the seat can be associated.

The third plate (21) is articulated, by means of a pair of fourth pivots (25a, 25b), to the second plate (7).

Means (19, 40) are associated with the linkage (14) for connection to at least one slat or leaf spring (28), which is arranged on a plane that is substantially parallel to the plane of the seat and is adapted to elastically contrast the inclination of the second plate (7) with respect to the first plate (2).

## Description

The present invention relates to an adjustment device for a chair which is provided with an oscillating mechanism.

Nowadays it is known to provide chairs that are fitted with a mechanism the function of which is to enable for example the height adjustment of a seat and the adjustment of the oscillation, or the locking in place, of a backrest.

An example of the mentioned prior art is disclosed in US6120096, where the activation of the mechanisms which interact with the seat and with the backrest is performed by using a first lever, the rotation of which leads to the packing or not of special slats, and also a second lever, the lifting of which leads its terminal end to interact with a gas-filled piston present on a central gas-operated post.

The background art in this field involves the use of metal components that increase the rigidity of the system and which have increasingly high development and production costs.

In addition, the number of such components is high, which entails a high structural bulk of the mechanism with consequent increase in its size, a long assembly time, and an increase in the costs of investing in the construction of equipment for assembling the system.

The need to correlate the production of the various components to each specific design also imposes costs of investing in and adapting to the various types of chair seats and chair backrests.

There is a high overall volume of the oscillating mechanism, which also results in a worsening of the aesthetic factor, as well as in high storage, packaging and transport costs.

The aim of the present invention is to solve the above-mentioned technical problems, eliminating the drawbacks in the cited known art, by providing an adjustment device for a chair which is provided with an oscillating mechanism, which structurally offers a considerable reduction in terms of dimensions.

Within the above aim, an object of the adjustment device according to the invention is to provide an oscillating mechanism that is very compact in terms of height.

Another object is to provide a mechanism that can be applied to a chair and therefore mounted on common seats or on customized seats.

Another object is to provide an adjustment device according to the invention that offers low costs of development and production and at the same time is flexible for adaptation to customized designs.

Another object is to provide a mechanism that enables a controlled oscillation to be obtained in an optimal manner, and which can be adapted to various types of backrests.

Another object is to provide an adjustment device according to the invention that requires less time for assembly and enables a saving in the investments relating to the construction of equipment for assembling it.

Another object is to obtain an adjustment device according to the invention that has a limited number of parts inside it.

Another object is to provide an adjustment device that is structurally simple and of low cost and can be made with the usual conventional systems.

This aim and these and other objects which will become better apparent hereinafter are achieved by an adjustment device for a chair, comprising an oscillating mechanism composed of a first plate, associated with a central gas-operated post for the height adjustment of a seat, characterized in that a second plate is articulated to said first plate so that it can oscillate, by means of a pair of first pivots and is fixed to a backrest, a linkage being furthermore articulated to said first plate, by means of a second pivot, and being in turn articulated, by means of a third pivot, to a third plate, with which it is possible to associate said seat, said third plate being articulated, by means of a pair of fourth pivots, to said second plate, means being associated with said linkage for connection to at least one slat or leaf spring, which is arranged on a plane that is substantially parallel to the plane of said seat and is adapted to elastically contrast the inclination of said second plate with respect to said first plate.

Further characteristics and advantages of the invention will be made clearer from the detailed description of a particular, but not exclusive, embodiment, illustrated by way of an indicative and non-limiting example in the enclosed drawings, in which:

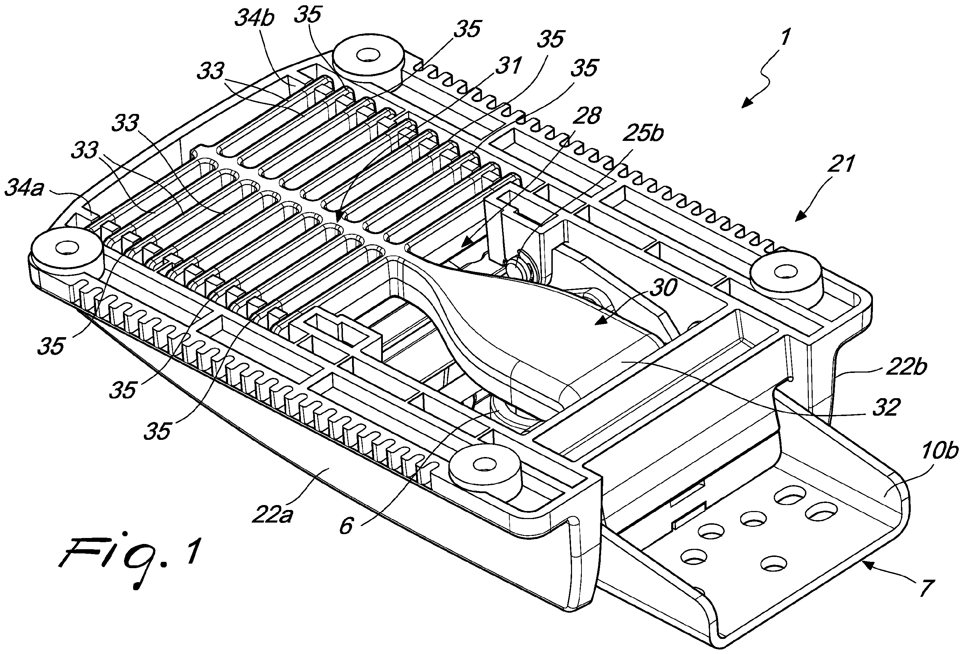

Figure 1 is a three-quarter side view from above of the adjustment device according to the present invention;

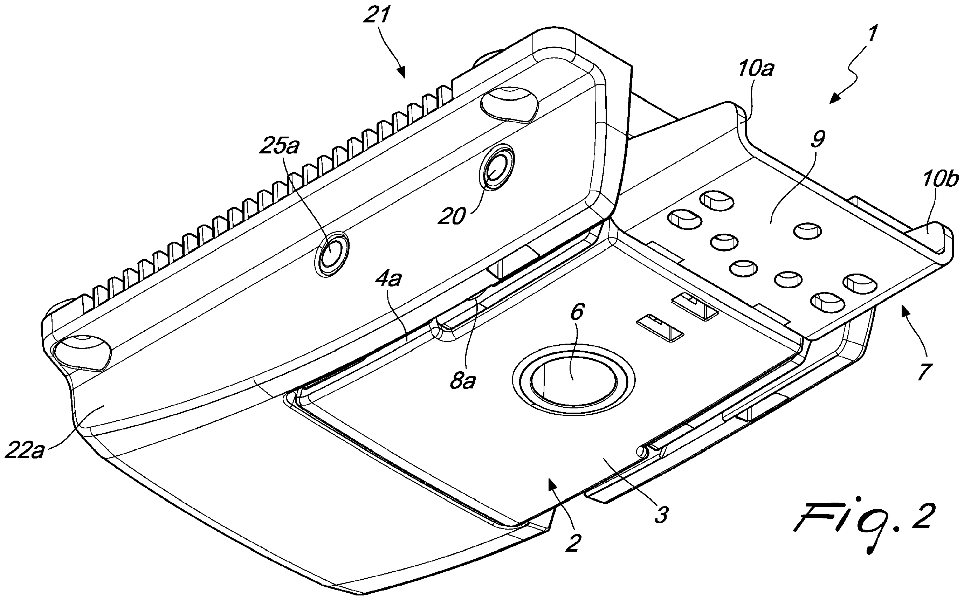

Figure 2 is a three-quarter side view from below of the device;

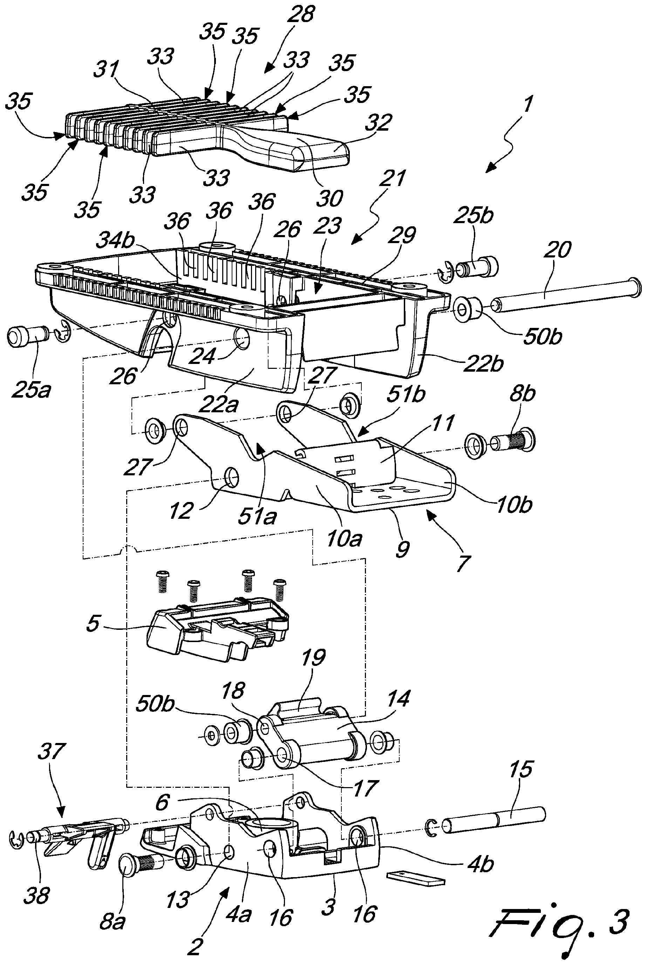

Figure 3 is an exploded view of the adjustment device according to the present invention;

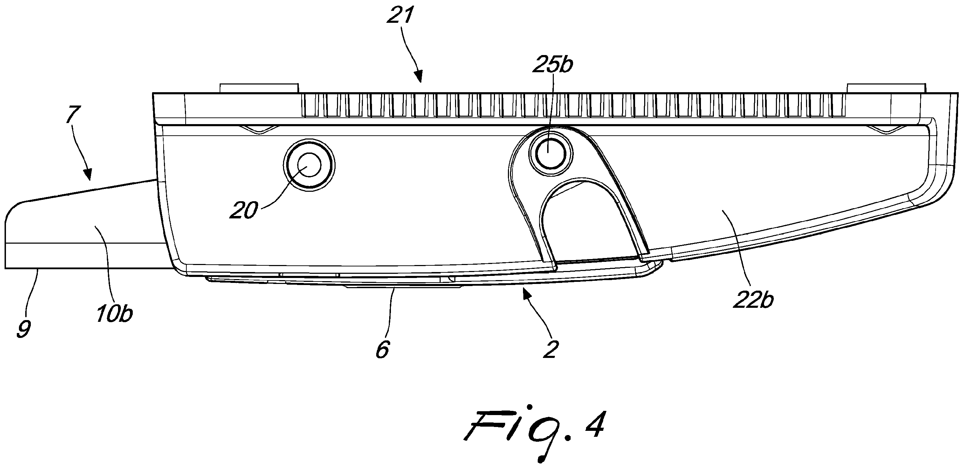

Figure 4 is a side view of the adjustment device according to the present invention in the inactive condition;

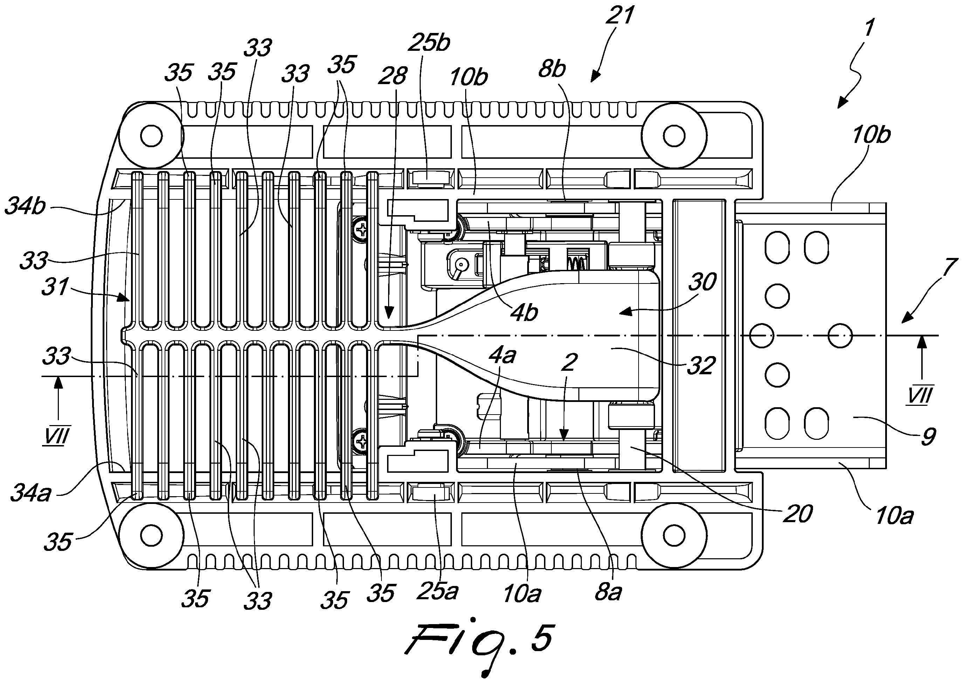

Figure 5 is a view from above of the adjustment device according to the present invention;

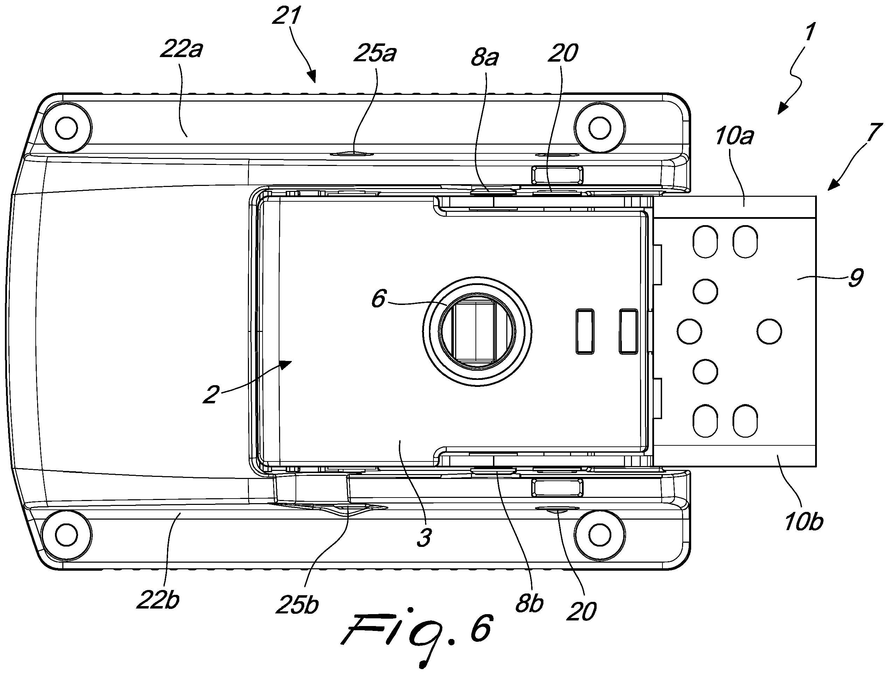

Figure 6 is a view from below of the adjustment device according to the present invention;
Figure 7 is a cross-sectional view of the adjustment device according to the present invention taken along the line VII-VII of Figure 5 in the condition in which it is not under load;

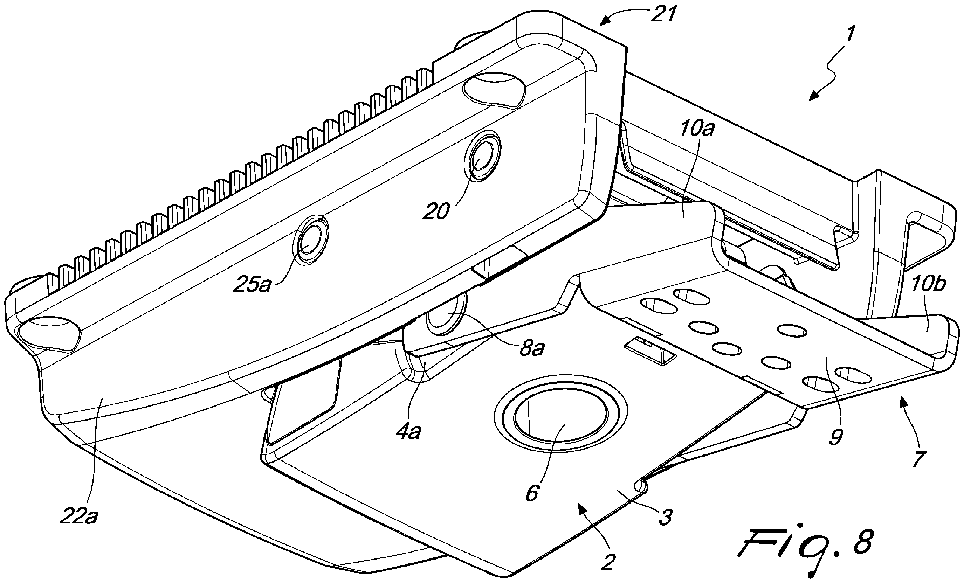

Figure 8 is a three-quarter side view from below of the adjustment device according to the present invention in the condition in which it is under load;
Figure 9 is a view from above of the adjustment device according to the present invention in the condition in which it is under load;

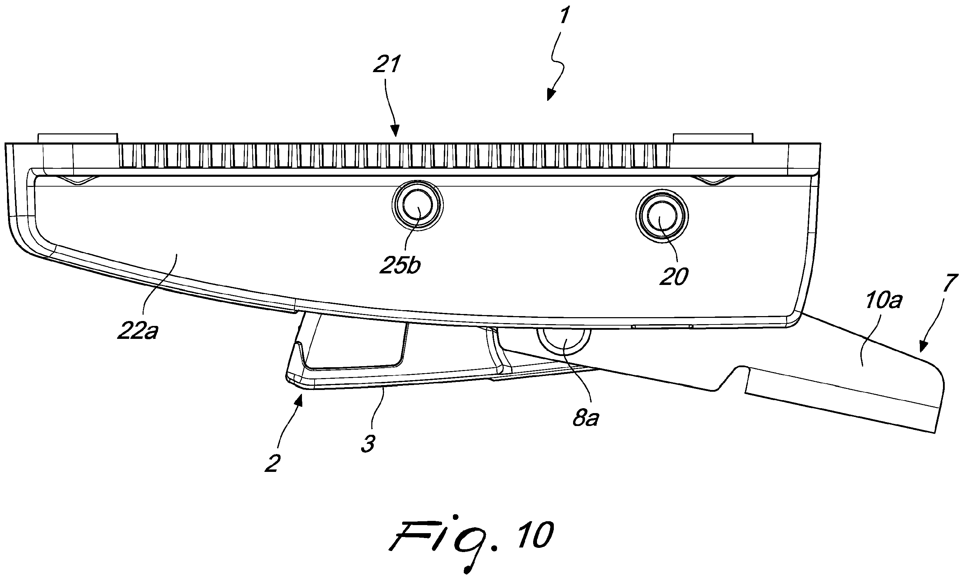

Figure 10 is a side view of the adjustment device according to the present invention in the condition in which it is under load;
Figure 11 is a cross-sectional view of the adjustment device according to the present invention taken along the line XI-XI of Figure 9 in the condition in which it is under load;

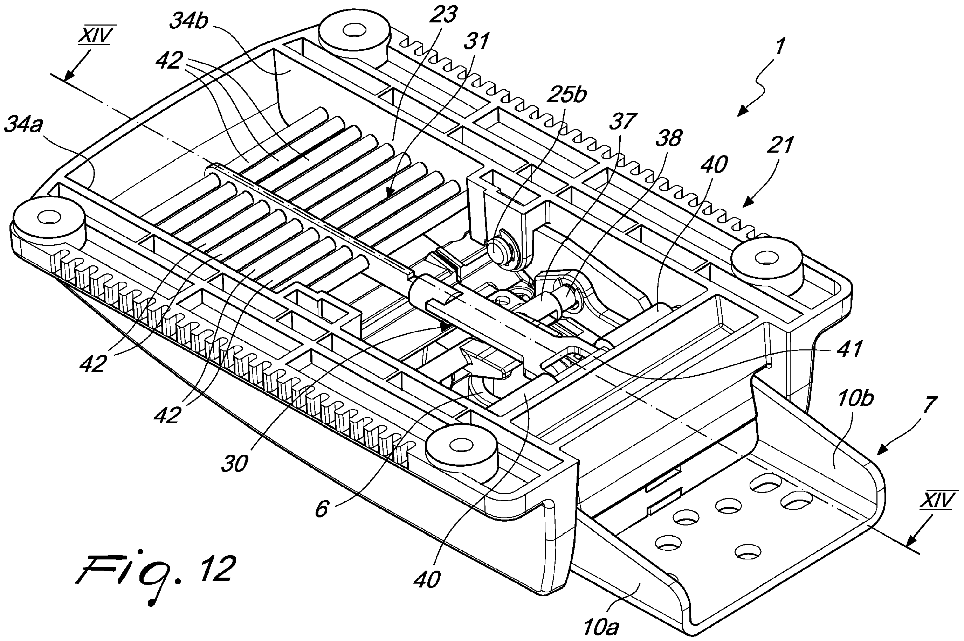

Figure 12 is a perspective view of a different embodiment of the adjustment device according to the present invention ;

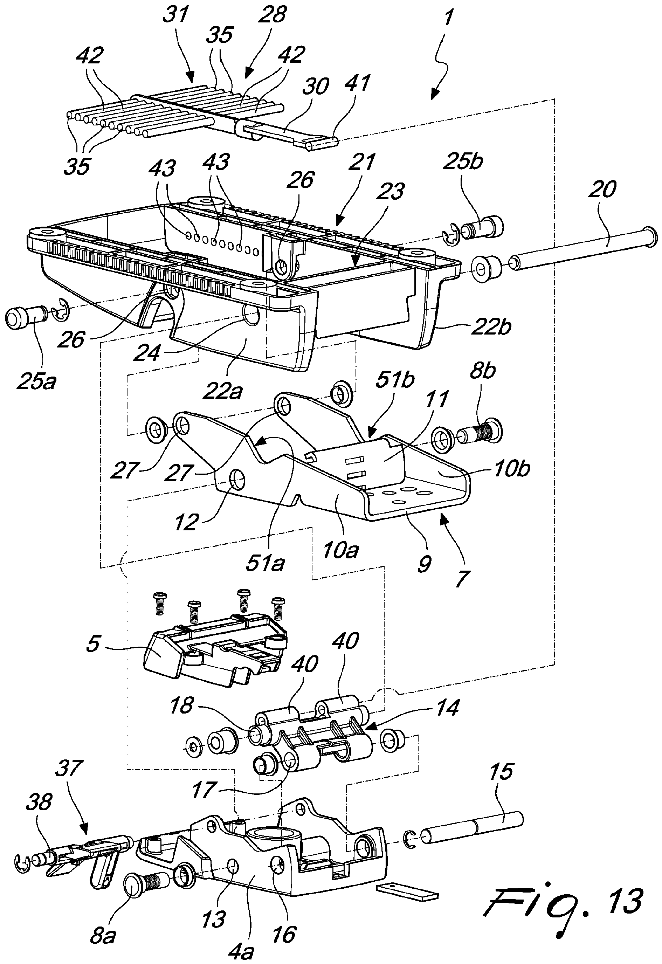

Figure 13 is an exploded view of the adjustment device of figure 12;

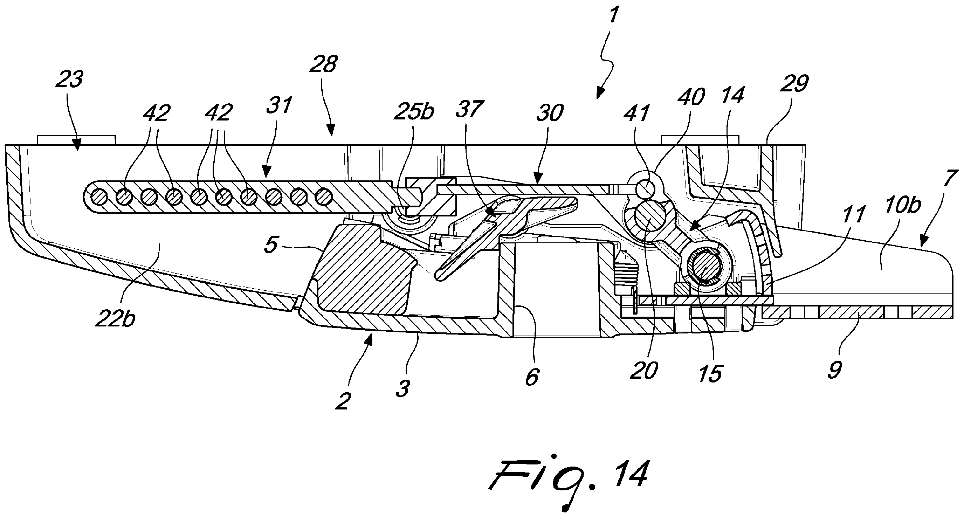

Figure 14 is a cross-sectional view of the adjustment device according to the present invention of figure 13 taken along the line XIV-XIV of Figure 12;

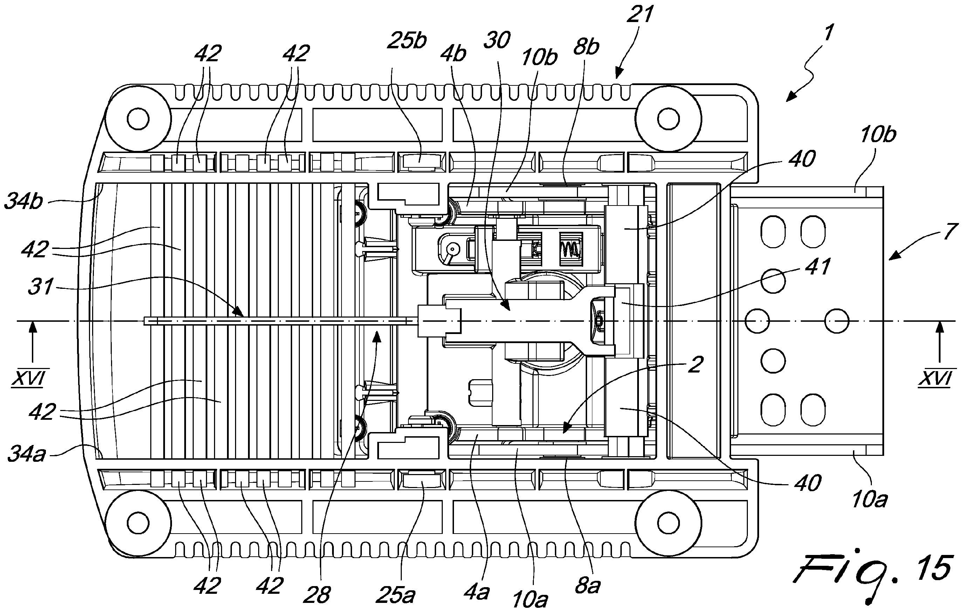

Figure 15 is a view from above of the adjustment device of figure 14;

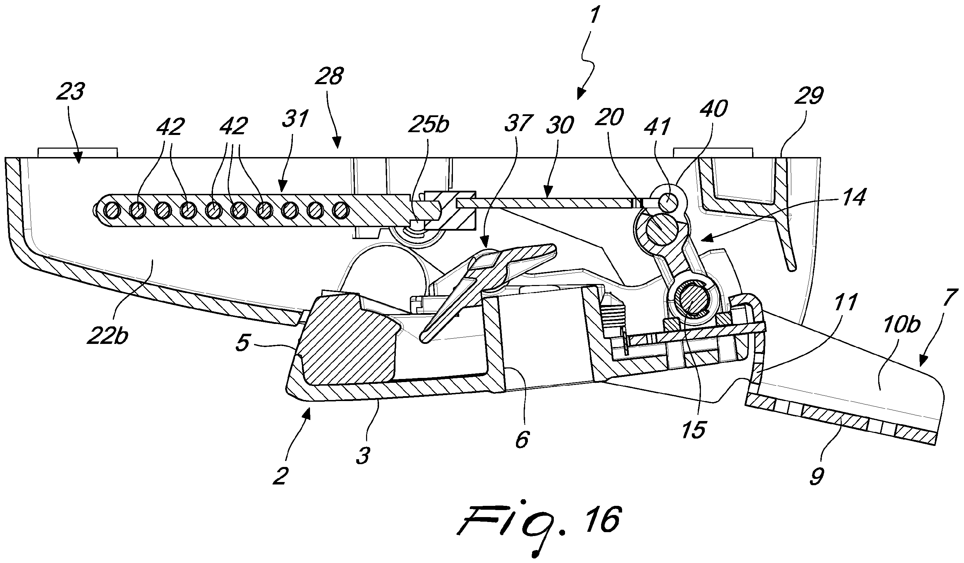

Figure 16 is a cross-sectional view taken along the line XVI-XVI of Figure 15.

In the embodiments that follow, individual characteristics shown in relation to specific examples may in reality be interchanged with other, different characteristics, existing in other embodiments.

With reference to the figures, the reference numeral 1 generally designates an adjustment device for a chair (not shown in its entirety) which comprises an oscillating mechanism composed of a first plate 2, which has a box-like shape so as to define a first base 3, a first pair of side wings 4a, 4b.

A support 5 is coupled to the first plate 2.

At the (first) base 3, there is a first bushing 6 which is associated with the end of the stem of a central gas-operated post, mounted on wheels and used for the height adjustment of a seat (not shown).

A second plate 7, fixed to a backrest, is articulated so that it can oscillate at the first pair of side wings 4a, 4b of the first plate 2, in a region that is adjacent to the base 3 and substantially halfway along their longitudinal extension, the articulation occurring by means of a pair of first pivots 8a, 8b with the interposition of adapted bushings.

The second plate 7 has a box-like shape so as to define a second base 9 and a second pair of side wings 10a, 10b between which there is an intermediate wall 11, which protrudes from the second base 9.

The articulation between the pair of first pivots 8a, 8b and the second pair of side wings 10a, 10b occurs substantially in a region that is adjacent to the intermediate wall 11 at adapted first holes 12 and second holes 13 which are provided respectively in each one of the second pair of side wings 10a, 10b and in each one of the first pair of side wings 4a, 4b.

A backrest, conventional and not shown, can be associated with the second base 9, by means of a special blade, also conventional and not shown.

A linkage 14 is arranged and articulated, so that it can oscillate, proximate to the end that is opposite to the support 5, the articulation occurring by means of a second pivot 15 which is located at adapted third holes 16 and a first through seat 17, which are provided respectively on the side wings 4a, 4b and transversely to one end of the linkage 14.

Adapted bushings are interposed between the linkage 14 and the lateral wings 4a, 4b.

The linkage 14 has, at the other end, a second through seat 18, which is parallel to the preceding through seat, and a tooth 19 protrudes therefrom on the opposite side with respect to the first base 3.

A third pivot 20 is arranged at the second through seat 18 of the linkage 14 for the articulation, with the interposition of adapted bushings, of a third plate 21, which has a box-like shape so as to define a third pair of side wings 22a, 22b between which a central through seat 23 is provided for the linkage 14, the first plate 2, and the second plate 7.

In the inactive condition the third pivot 20 is arranged, at the ends with which adapted bushings 50a, 50b are associated, adjacent to a recess 51a, 51b which is provided on the second pair of side wings 10a, 10b of the second plate 7 in a region interposed between the first holes 12 and the second base 9.

It is possible to associate the seat with the third plate 21, the articulation with the linkage 14 occurring at adapted fourth holes 24 which are provided proximate to the end of the third plate 21 that is adjacent to the underlying second base 9 of the second plate 7.

The third plate 21 is also articulated to the second plate 7 by means of a pair of fourth pivots 25a, 25b arranged at adapted fifth holes 26 which are provided in the third pair of side wings 22a, 22b approximately halfway along their longitudinal extension.

The pair of fourth pivots 25a, 25b acts, with the interposition of adapted bushings, at sixth holes 27 which are provided in the front end of the second pair of side wings 10a, 10b that is opposite to the second base 9.

The pair of fourth pivots 25a, 25b is arranged, when the device is assembled and, in line with the sixth holes 27 and the fourth holes 24, at a distance from the plane of arrangement of the second base 9 that is greater than the distance at which the first holes 12 are provided in the second plate 7 and second holes 13 are provided in the first plate 2, while the third holes 16 are arranged, with respect to a vertical plane, at an intermediate distance between the fourth and sixth holes 24, 27 and the first and second holes 12, 13.

The tooth 19 of the linkage 14 constitutes a means for connection to the at least one slat or leaf spring 28, which when installed is placed inside the central through seat 23 of the third plate 21 and is arranged proximate to the upper end 29 of the latter on a plane that is substantially parallel to the plane of the overlying seat.

The at least one slat or leaf spring 28 is adapted to elastically contrast the inclination of the second plate 7 with respect to the first plate 2, and is substantially T-shaped so as to define a stem 30 and a head 31.

The stem 30 has, at the free terminal end, a hook-like shape 32 which is adapted to engage the tooth 19.

The head 32 is composed of a plurality of fins 33, which are arranged parallel to each other along a plane that is perpendicular to the upper end 29 of the third plate 21 so that they are arranged, when installed, transversely to the third plate 21.

The fins 33 have a length such as to be arranged, when installed, so that the terminal ends 35 are beyond the surfaces of the internal side walls 34a, 34b of the third plate 21, and being arranged at adapted and complementarily-shaped accommodations 36 which are provided in the internal side walls 34a, 34b.

The length of the slat or leaf spring 28 is such that it is arranged, when installed, inside the central through seat 23 with each one of the terminal ends 35 interlocked in the corresponding accommodation 36 and with the stem 30 engaged, by means of the hook 32, with the tooth 19.

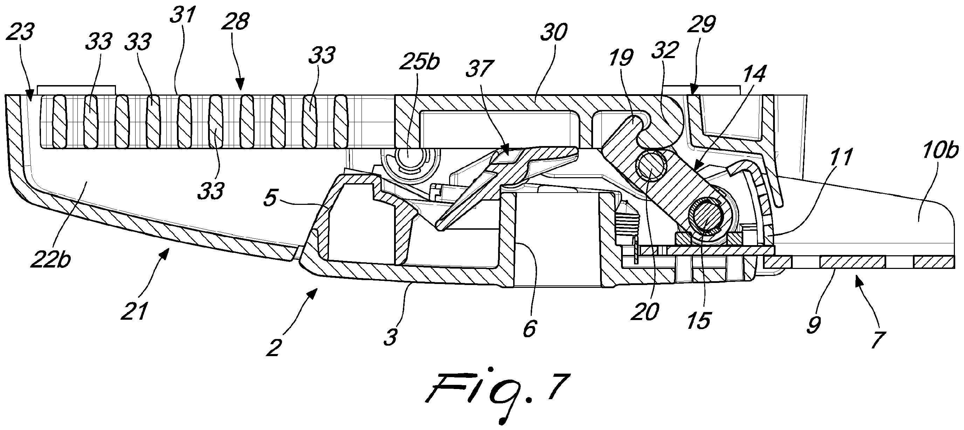

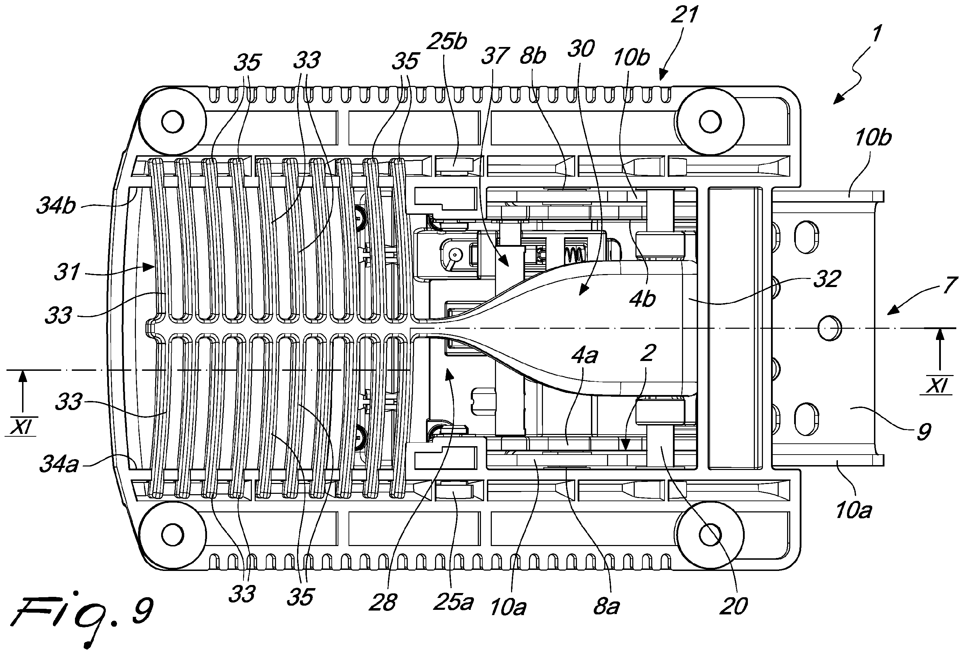

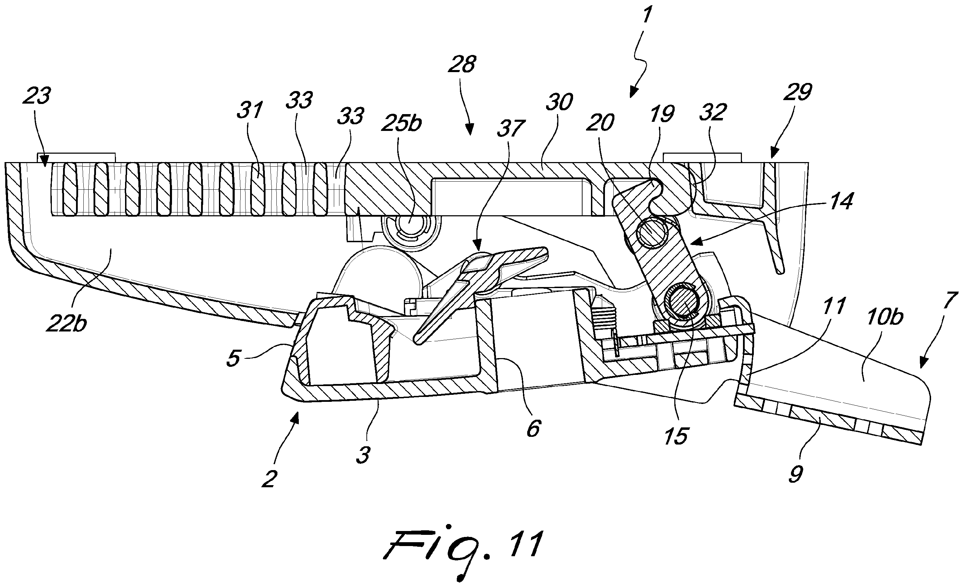

The inactive condition is shown in Figure 7; a subsequent clockwise inclination of the second plate 7, and therefore when the backrest of the chair is inclined because the user leans against it, is followed by a movement, as shown in Figures 9 and 11, of the third plate 21 and therefore of the linkage 14 which draws the slat or leaf spring 28 toward the backrest; the movement is allowed by the elastic deformation of the fins 33 which are locked at the ends in the accommodations 36.

The fins 33 are flexed elastically and therefore loaded, thus contrasting the inclination and allowing the automatic repositioning of the backrest once the leaning against the backrest has ceased.

The device further comprises an adapted actuator 37, provided with a fourth pivot 38 which is pivoted to the first pair of side wings 4a, 4b of the first plate 2 at adapted seventh holes 39a, 39b, the actuator 37 being adapted to interact with the stem of the central gas-operated post.

Thus it has been found that the adjustment device of the invention fully achieves the intended aim and objects, since an adjustment device is obtained for a chair provided with an oscillating mechanism that makes it possible to optimally adjust the oscillation of the backrest with respect to the seat and which at the same time structurally offers a considerable reduction in terms of dimensions, in particular being very compact in terms of height.

The limited overall number of parts inside the device enables a reduction of costs and less time for assembly, with a consequent saving of investments relating to the construction of equipment for assembling the invention.

The possibility of using components made of plastic material makes it possible to provide manufactured articles that can in every way meet the technical characteristics of metallic components, so achieving a major improvement in the aesthetic factor which could not be obtained with traditional structures.

Furthermore, the use of a slat or leaf spring makes it possible to achieve customization for different designs.

The fact of making the slat or leaf spring of plastic also makes it possible, with lower investment costs, to adapt it to different types of seats, therefore benefiting from an aesthetic flexibility that cannot be obtained with traditional and known metal bars.

The device can be installed on common seats or on customized seats indifferently, and is structurally simple.

Figures from 12 to 16 show an embodiment in which the linkage 14 also has a second through seat 18 from which at least one sleeve 40 protrudes, on the opposite side with respect to the first base 3, said sleeve being axially perforated and having the same axis as the second through seat 18.

The sleeve 40 of the linkage 14 constitutes a means for connection to the at least one slat or leaf spring 28, which when installed is placed inside the central through seat 23 of the third plate 21 and is arranged proximate to the upper end 29 of the latter on a plane that is substantially parallel to the plane of the overlying seat.

The slat or leaf spring 28 is substantially T-shaped so as to define a stem 30 and a head 31, the stem 30 having, at the free terminal end, a cylindrical shape 41 which is adapted to engage the sleeve 40 rotatably.

The head 31 is composed of a plurality of rods 42, made of plastic material or metallic, which are arranged parallel to each other along a plane that is perpendicular to the upper end 29 of the third plate 21 so that they are arranged, when installed, transversely to the third plate 21.

The rods 42 have a length such that they are arranged, when installed, so that the terminal ends 35 are inserted into adapted and complementarily-shaped seats 43 provided on the surfaces of the internal side walls 34a, 34b of the third plate 21.

The length of the slat or leaf spring 28 is such that it is arranged, when installed, inside the central through seat 23 so that each one of the terminal ends 35 is inserted into the corresponding seat 43 and so that the stem 30 is engaged, by means of the cylinder 41, with the sleeve 40.

In this solution the slat or leaf spring 28 is fully contained in the central through seat 23, thus further reducing the spaces taken up in the device.

This solution also achieves all the set aim and objects of the present invention.

Naturally the materials used as well as the dimensions constituting the individual components of the invention may be more relevant according to the specific requirements.

The characteristics indicated as advantageous, advisable or similar, may also be lacking or be substituted by equivalent characteristics.

The disclosures in Italian Patent Application No. 102022000009572 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An adjustment device (1) for a chair, comprising an oscillating mechanism composed of a first plate (2), associated with a central gas-operated post for the height adjustment of a seat, **characterized in that** a second plate (7) is articulated to said first plate (2) so that it can oscillate, by means of a pair of first pivots (8a, 8b) and is fixed to a backrest, a linkage (14) being furthermore articulated to said first plate (2), by means of a second pivot (15), and being in turn articulated, by means of a third pivot (20), to a third plate (21), with which it is possible to associate said seat, said third plate (21) being articulated, by means of a pair of fourth pivots (25a, 25b), to said second plate (7), means (19, 40) being associated with said linkage (14) for connection to at least one slat or leaf spring (28), which is arranged on a plane that is substantially parallel to the plane of said seat and is adapted to elastically contrast the inclination of said second plate (7) with respect to said first plate (2).

2. The device (1) according to claim 1, wherein said first plate (2) has a box-like shape so as to define a first base (3), a first pair of side wings (4a, 4b), and a support (5), at said base (3) there being a first bushing (6) at which the end of the stem of a central gas-operated post is associated, said post being mounted on wheels and being used for the height adjustment of a seat, **characterized in that** said second plate (7), fixed to a backrest, is articulated so that it can oscillate at said first pair of side wings (4a, 4b) of said first plate (2), in a region that is adjacent to said base (3) and substantially halfway along their longitudinal extension, the articulation occurring by means of said pair of first pivots (8a, 8b) with the interposition of adapted bushings.

3. The device (1) according to claim 2, **characterized in that** said second plate (7) has a box-like shape so as to define a second base (9) and a second pair of side wings (10a, 10b) between which there is an intermediate wall (11), which protrudes from said second base (9), the articulation between said pair of first pivots (8a, 8b) and said second pair of side wings (10a, 10b) occurring substantially in a region that is adjacent to said intermediate wall (11) at first holes (12) and second holes (13) which are provided respectively in each one of said second pair of side wings (10a, 10b) and in each one of said first pair of side wings (4a, 4b), a backrest being associable with said second base (9).

4. The device (1) according to claim 3, **characterized in that** a linkage (14) is arranged and articulated, so that it can oscillate, proximate to the end that is opposite to said support (5), the articulation occurring by means of a second pivot (15) which is located at third holes (16) and a first through seat (17), which are provided respectively on said first pair of side wings (4a, 4b) and transversely to one end of said linkage (14), said linkage having, at the other end, a second through seat (18), which is parallel to the preceding through seat, a tooth (19) protruding therefrom on the opposite side with respect to said first base (3), a third pivot (20) being arranged at said second through seat (18) of said linkage (14) for the articulation, with the interposition of bushings, of a third plate (21), which has a box-like shape so as to define a third pair of side wings (22a, 22b) between which a central through seat (23) is provided for said linkage (14), said first plate (2), and said second plate (7).

5. The device (1) according to claim 4, **characterized in that** in the inactive condition said third pivot (20) is arranged, at the ends with which bushings (50a, 50b) are associated, adjacent to a recess (51a, 51b) which is provided on said second pair of side wings (10a, 10b) of said second plate (7) in a region interposed between said first holes (12) and said second base (9).

6. The device (1) according to claim 5, **characterized in that** said seat is configured to be associated with said third plate (21), the articulation with said linkage (14) occurring at fourth holes (24) which are provided proximate to the end of said third plate (21) that is adjacent to said underlying second base (9) of said second plate (7), said third plate (21) being articulated to said second plate (7) by means of a pair of fourth pivots (25a, 25b) arranged at fifth holes (26) which are provided in said third pair of side wings (22a, 22b) approximately halfway along their longitudinal extension.

7. The device (1) according to claim 6, **characterized in that** said pair of fourth pivots (25a, 25b) acts, with the interposition of bushings, at sixth holes (27) which are provided in the front end of said second pair of side wings (10a, 10b) that is opposite to said second base (9), said pair of fourth pivots (25a, 25b) being arranged, when the device is assembled and, in line with said sixth holes (27) and said fourth holes (24), at a distance from the plane of arrangement of said second base (9) that is greater than the distance at which said first holes (12) are provided in said second plate (7) and second holes (13) are provided in said first plate (2), while said third holes (16) are arranged, with respect to a vertical plane, at an intermediate distance between said fourth and sixth holes (24, 27) and said first and second holes (12, 13).

8. The device (1) according to claim 4, **characterized in that** said tooth (19) of said linkage (14) constitutes a means for connection to at least one slat or leaf spring (28), which when installed is located inside said central through seat (23) of said third plate (21) and is arranged proximate to the upper end (29) thereof on a plane that is substantially parallel to the plane of said overlying seat, said at least one slat or leaf spring (28) being adapted to elastically contrast the inclination of said second plate (7) with respect to said first plate (2), and being substantially T-shaped so as to define a stem (30) and a head (31), said stem (30) having, at a free terminal end, a hook-like shape (32) which is adapted to engage said tooth (19), said head (32) being composed of a plurality of fins (33), which are arranged parallel to each other along a plane that is perpendicular to said upper end (29) of said third plate (21) so that they are arranged, when installed, transversely to said third plate (21).

9. The device (1) according to claim 8, **characterized in that** said fins (33) have a length such as to be arranged, when installed, so that the terminal ends (35) are beyond the surfaces of the internal side walls (34a, 34b) of said third plate (21), being arranged at complementarily-shaped accommodations (36) which are provided in said internal side walls (34a, 34b), the length of said slat or leaf spring (28) being such that it is arranged, when installed, inside said central through seat (23) with each one of said terminal ends (35) positioned/interlocked in the corresponding accommodation (36) and with the stem (30) engaged, by means of said hook (32), with said tooth (19).

10. The device (1) according to claim 8, **characterized in that**, starting from the inactive condition, a subsequent clockwise inclination of said second plate (7), and therefore when the backrest of the chair is inclined because the user leans against it, is followed by a movement of said third plate (21) and therefore of said linkage (14) which draws said slat or leaf spring (28) toward said backrest, the movement being allowed by the elastic deformation of said fins (33) which are locked at the ends in said accommodations (36).

11. The device (1) according to claim 8, **characterized in that** at least one sleeve (40) protrudes, on the opposite side with respect to said first base (3), from said second through seat (18) of said linkage (14), is axially perforated and has the same axis as said second through seat (18), said sleeve (40) constituting said means for connection to said at least one slat or leaf spring (28), which when installed is placed inside said central through seat (23) of said third plate (21) and is arranged proximate to the upper end (29) of the latter on a plane that is substantially parallel to the plane of said overlying seat.

12. The device (1) according to claim 11, **characterized in that** said slat or leaf spring (28) is substantially T-shaped so as to define a stem (30) and a head (31), said stem (30) having, at the free terminal end, a cylindrical shape (41) which is adapted to engage said sleeve (40) rotatably, said head (31) being composed of a plurality of rods (42), made of plastic material or metallic, which are arranged parallel to each other along a plane that is perpendicular to said upper end (29) of said third plate (21) so that they are arranged, when installed, transversely to said third plate (21).

13. The device (1) according to claim 12, **characterized in that** said rods (42) have a length such that they arrange themselves, when installed, so that said terminal ends (35) are inserted into complementarily-shaped seats (43) provided on the surfaces of said internal side walls (34a, 34b) of said third plate (21).

14. The device (1) according to claim 12, **characterized in that** the length of said slat or leaf spring (28) is such that it is arranged, when installed, inside said central through seat (23) so that each one of said terminal ends (35) is inserted into the corresponding seat (43) and so that said stem (30) is engaged, by means of said cylinder (41), with said sleeve (40).
